(19) Europäisches Patentamt
European Patent Office
Office européen des brevets

(11) **EP 4 571 936 A1**

(12) **EUROPEAN PATENT APPLICATION**
published in accordance with Art. 153(4) EPC

(43) Date of publication:
**18.06.2025 Bulletin 2025/25**

(21) Application number: **24826053.1**

(22) Date of filing: **16.01.2024**

(51) International Patent Classification (IPC):
*H01M 10/54* (2006.01)    *H01M 4/525* (2010.01)
*H01M 4/36* (2006.01)    *H01M 10/052* (2010.01)
*C01G 53/00* (2025.01)    *C22B 1/00* (2006.01)
*C22B 1/02* (2006.01)    *C22B 7/00* (2006.01)
*C22B 4/00* (2006.01)

(52) Cooperative Patent Classification (CPC):
Y02W 30/84

(86) International application number:
**PCT/KR2024/000773**

(87) International publication number:
**WO 2024/262728 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.06.2023 KR 20230078759
12.01.2024 KR 20240005347**

(71) Applicant: **LG Energy Solution, Ltd.
Seoul 07335 (KR)**

(72) Inventors:
• **PARK, Gwangseon**
  **Daejeon 34122 (KR)**
• **CHOI, Jeong Mi**
  **Daejeon 34122 (KR)**
• **LEE, Jeongbae**
  **Daejeon 34122 (KR)**

(74) Representative: **Hoffmann Eitle
Patent- und Rechtsanwälte PartmbB
Arabellastraße 30
81925 München (DE)**

(54) **METHOD FOR REGENERATING POSITIVE ELECTRODE ACTIVE MATERIAL, REGENERATED POSITIVE ELECTRODE ACTIVE MATERIAL MANUFACTURED THEREBY, AND SECONDARY BATTERY COMPRISING SAME**

(57)    The present invention relates to a method of recycling a cathode active material, a recycled cathode active material prepared using the method, and a secondary battery including the recycled cathode active material. More particularly, the present invention relates to a method of recycling a cathode active material, the method including step (a) of pulverizing a waste cathode including a current collector and a cathode active material layer coated on the current collector under dry conditions using a pin mill to obtain the cathode active material layer in powder form; step (b) of heat-treating the obtained cathode active material layer powder at 460 to 530 °C in air to recover a cathode active material; step (c) of adding a lithium precursor to the recovered cathode active material and performing annealing at 400 to 1000 °C; and step (d) of washing the annealed cathode active material with a washing solution, a recycled cathode active material prepared using the method, and a secondary battery including the recycled cathode active material.

According to the present invention, the present invention relates to a method of recycling a cathode active material, the method being capable of easily removing a binder and a conductive material even at a heat treatment temperature lower than that in the conventional method, minimizing damage to a cathode active material due to washing, and restoring a crystal structure with a small amount of a lithium precursor due to the reduction of lithium loss in the cathode active material; being capable of providing a cathode active material with excellent battery characteristics; being environmentally friendly by not using an acid in a process of recovering and recycling the cathode active material; being capable of reducing process costs by eliminating the need for neutralization and wastewater treatment due to the non-use of acid; being capable of preventing discarding of metal elements by recycling the cathode active material without decomposing the cathode active material; and being capable of preventing generation of toxic gases or explosion by not using organic solvents.

[FIG. 9]

S10 — WASTE CATHODE

S20 — CRUSHING

S30 — DRY PULVERIZING

S40 — HEAT TREATING

S50 — ANNEALING

S60 — WASHING

S70 — SURFACE COATING

RECYCLED CATHODE ACTIVE MATERIAL

**Description**

[Technical Field]

[Cross-Reference to Related Applications]

This application claims priority to Korean Patent Application No. 10-2023-0078759, filed on June 20, 2023, and Korean Patent Application No. 10-2024-0005347, re-filed on January 12, 2024, based on the priority of the above patent, in the Korean Intellectual Property Office, the disclosures of each of which are incorporated herein by reference.

The present invention relates to a method of recycling a cathode active material, a recycled cathode active material prepared using the method, and a secondary battery including the recycled cathode active material. More particularly, the present invention relates to a method of recycling a cathode active material, the method being capable of easily removing a binder and a conductive material even at a heat treatment temperature lower than that in the conventional method, minimizing damage to a cathode active material due to washing, restoring a crystal structure with a small amount of a lithium precursor due to the reduction of lithium loss in the cathode active material by pulverizing a waste cathode using a pin mill under dry conditions before heat treatment to obtain a cathode active material layer in powder form, heat-treating the cathode active material layer at a temperature lower than that in the conventional method to recover a cathode active material, immediately adding a lithium precursor to the recovered cathode active material without washing, and then performing annealing; being capable of providing a cathode active material with excellent capacity characteristics and lifespan characteristics; being environmentally friendly by not using an acid in a process of recovering and recycling the cathode active material; being capable of reducing process costs by eliminating the need for neutralization and wastewater treatment due to the non-use of acid; being capable of preventing discarding of metal elements by recycling the cathode active material without decomposing the cathode active material; being capable of preventing generation of toxic gases or explosion by not using organic solvents; and being capable of greatly improving economic efficiency and productivity.

[Background Art]

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessary due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled cathode active material, which degrades the rate performance of a battery. In addition to the above disadvantages, waste gas is generated, and energy consumption is excessive.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

Therefore, there is an urgent need to develop a method of safely recycling a cathode active material having improved battery performance in an environmentally friendly manner at a low cost through a simple process without loss of metal elements from a waste cathode.

[Disclosure]

[Technical Problem]

Therefore, the present invention has been made in view of the above problems, and it is one object of the present invention to provide a method of recycling a cathode active material, the method being capable of easily removing a binder and a conductive material even at a heat treatment temperature lower than that in the conventional method, minimizing damage to a cathode active material due to washing, restoring a crystal structure with a small amount of a lithium precursor due to the reduction of lithium loss in the cathode active material by pulverizing a waste cathode using a pin mill under dry conditions before firing the waste cathode to obtain a cathode active material layer in powder form, heat-treating the cathode active material layer at a temperature lower than that in the conventional method to recover a cathode active material, immediately adding a lithium precursor to the recovered cathode active material without washing, and then performing annealing; being capable of providing a cathode active material with excellent capacity characteristics and lifespan characteristics; being environmentally friendly by not using an acid in a process of recovering and recycling the cathode active material; being capable of reducing process costs by eliminating the need for neutralization and wastewater treatment due to the non-use of acid; being capable of preventing discarding of metal elements by recycling the cathode active material without decomposing the cathode active material; being capable of preventing generation of toxic gases or explosion by not using organic solvents; and being capable of greatly improving economic efficiency and productivity.

It is another object of the present invention to provide a secondary battery having excellent initial charge/-discharge capacity and lifespan characteristics.

The above and other objects can be accomplished by the present invention described below.

[Technical Solution]

I) In accordance with one aspect of the present invention, provided is a method of recycling a cathode active material, the method including step (a) of pulverizing a waste cathode including a current collector and a cathode active material layer coated on the current collector under dry conditions using a pin mill to obtain the cathode active material layer in powder form; step (b) of heat-treating the obtained cathode active material layer powder at 460 to 530 °C in air to recover a cathode active material; step (c) of adding a lithium precursor to the recovered cathode active material and performing annealing at 400 to 1000 °C; and step (d) of washing the annealed cathode active material with a washing solution.

II) According to I), in step (a), pulverizing by the pin mill may be performed at 5000 to 10000 rpm.

III) According to I) or II), step (a) may include a preprocessing step of shredding or cutting the waste cathode.

IV) According to I) to III), the cathode active material recovered after heat treatment in step (b) may be subjected to annealing of step (c) without washing.

V) According to I) to IV), in step (b), a total amount of LiOH and $Li_2CO_3$, which are surface residues of the cathode active material recovered after heat treatment, may be adjusted to an amount of 1.35 % by weight or less.

VI) According to I) to V), the cathode active material may include one or more selected from the group consisting of nickel·cobalt·manganese (NCM)-based cathode active materials, nickel·cobalt·aluminum (NCA)-based cathode active materials, and nickel-cobalt-manganese-aluminum (NCMA)-based cathode active materials, and may include Ni in an amount of 60 mol% or more based on 100 mol% in total of other metals other than Li.

VII) According to I) to VI), in step (b), heat treatment may be performed for 1.5 hours to 6 hours.

VIII) According to I) to VII), based on 100 mol% in total of lithium in the cathode active material as a raw material used in the cathode active material layer, the lithium precursor may be added in an amount of 3 to 17 mol%.

IX) According to I) to VIII), the lithium precursor may include one or more of LiOH, $Li_2CO_3$, $LiNO_3$, and $Li_2O$.

X) According to I) to IX), the annealing may be performed at 400 to 1000 °C under an oxygen atmosphere or in air.

XI) According to I) to X), the washing solution may be water.

XII) According to I) to XI), the method of recycling a cathode active material may include step (e) of coating a surface of the washed cathode active material.

XIII) According to I) to XII), the surface coating may be performed by coating the surface with one or more of a metal, an organic metal, and a carbon component in a solid or liquid manner and heat-treating the surface at 100 to 1200 °C.

XIV) In accordance with another aspect of the present invention, provided is a recycled cathode active material prepared using the method according to I) to XIII).

XV) In accordance with still another aspect of the present invention, provided is a recycled cathode active material including one or more selected from the group consisting of nickel·cobalt·manganese (NCM)-based cathode active materials, nickel·cobalt·aluminum (NCA)-based cathode active materials, and nickel·cobalt·manganese·aluminum (NCMA)-based cathode active materials and Ni in an amount of 60 mol% or more based on 100 mol% in total of other metals other than Li, wherein a total amount of residual LiOH and $Li_2CO_3$ in the recycled cathode active material is 1.35 % by weight or less, and the recycled cathode active material has a crystal structure having an a-axis length of 2.871 to 2.888 Å, a c-axis length of 14.200 to 14.210 Å, a cell volume of 101.45 to 101.82 Å$^3$, and a crystallite size of 72 to 84 nm as measured by XRD.

XVI) According to XV), a surface of the recycled cathode active material may be coated with a coating agent containing a metal or carbon.

XVII) In accordance with still another aspect of the present invention, provided is a secondary battery including the recycled cathode active material according to XV) or XVI).

XVIII) In accordance with yet another aspect of the present invention, provided is a method of recycling a cathode active material, the method including step (a) of applying an impulsive force of 5.1 to 10.2 newton (N) and a centrifugal force of 2600 to 10700 newton (N) to a waste cathode including a current collector and a cathode active material layer coated on the current collector under dry conditions to obtain the cathode active material layer in powder form; step (b) of heat-treating the obtained cathode active material layer powder at 460 to 530 °C in air to recover a cathode active material; step (c) of adding a lithium precursor to the recovered cathode active material and performing annealing at 400 to 1000 °C; and step (d) of washing the annealed cathode active material with a washing solution.

[Advantageous Effects]

According to the present invention, the present invention has an effect of providing a cathode active material being capable of easily removing a binder and a conductive material even at a heat treatment temperature lower than that in the conventional method, minimizing damage to a cathode active material due to washing, minimizing the occurrence of cracks in the active material by maintaining the shape of elementary particles without breaking and reducing the crystallite size and strain, restoring a crystal structure with a small amount of a lithium precursor due to the reduction of lithium loss in the cathode active material, and providing excellent capacity characteristics and lifespan characteristics by pulverizing a waste cathode using a pin mill under dry conditions before heat treatment to obtain a cathode active material layer in powder form, heat-treating the cathode active material layer at a temperature lower than that in the conventional method to recover a cathode active material, immediately adding a lithium precursor to the recovered cathode active material without washing, and then performing annealing.

In addition, the present invention has an effect of providing a cathode active material being environmentally friendly by not using an acid in a process of recovering and recycling a cathode active material; being capable of reducing process costs by eliminating the need for neutralization and wastewater treatment due to the non-use of acid; being capable of preventing discarding of metal elements by recycling the cathode active material without decomposing the cathode active material; and being capable of preventing generation of toxic gases or explosion by not using organic solvents.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is a diagram showing cathode scraps that are discarded after cutting an electrode plate from a cathode sheet.

FIG. 2 is a result showing weight change rates depending on heat treatment hours, which is obtained by analyzing cathode active material layer powder obtained after pulverizing using a pin mill by thermogravimetric analysis (TGA).

FIG. 3 is a result showing weight change rates depending on heat treatment temperatures, which is obtained by analyzing cathode active material layer powder obtained after pulverizing using a pin mill by thermogravimetric analysis (TGA).

FIG. 4 shows an SEM cross-section of a recycled cathode active material prepared in Example 2-3.

FIG. 5 shows an SEM cross-section of a recycled cathode active material prepared in Comparative Example 2-1.

FIG. 6 shows an SEM cross-section of a recycled cathode active material prepared in Comparative Example 2-2.
FIG. 7 is a graph showing initial capacity according to charge and discharge, which shows the coin cell evaluation results for each of the recycled cathode active materials prepared in Examples 2-1 to 2-7 and Comparative Example 2-3.
FIG. 8 is a graph showing high-temperature lifespan characteristics, which shows the coin cell evaluation results for each of the recycled cathode active materials prepared in Examples 2-1 to 2-7 and Comparative Example 2-1.
FIG. 9 is a flowchart explaining a process of recycling a cathode active material according to an embodiment according to the present invention.

[Best Mode]

The present inventors confirmed that, when a waste cathode was pulverized under dry conditions using a pin mill before heat treatment to obtain a cathode active material layer in powder form, the cathode active material layer was heat-treated to recover a cathode active material, a lithium precursor was immediately added to the recovered cathode active material without washing, and annealing was performed, a binder and a conductive material were easily removed even at a heat treatment temperature lower than that in the conventional method, damage to a cathode active material due to washing was minimized, the shape of elementary particles was maintained without being broken, the crystallite size was reduced, strain was reduced, and occurrence of cracks in the cathode active material was minimized. In addition, the crystal structure was restored with a small amount of lithium precursor, and thus an economic advantage was obtained. In addition, the battery characteristics of the recycled cathode active material was improved. Based on these results, the present inventors conducted further studies to complete the present invention.
Hereinafter, a method of recycling a cathode active material according to the present invention, a recycled cathode active material prepared using the method, and a secondary battery including the recycled cathode active material will be described in detail.
The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.
Unless otherwise defined, all technical and scientific terms used in this description have the same meaning as commonly understood by those of ordinary skill in the art to which the present invention pertains.

## Method of recycling cathode active material

The method of recycling a cathode active material of the present invention includes step (a) of pulverizing a waste cathode including a current collector and a cathode active material layer coated on the current collector under dry conditions using a pin mill to obtain the cathode active material layer in powder form; step (b) of heat-treating the obtained cathode active material layer powder at 460 to 530 °C in air to recover a cathode active material; step (c) of adding a lithium precursor to the recovered cathode active material and performing annealing at 400 to 1000 °C; and step (d) of washing the annealed cathode active material with a washing solution. In this case, by performing heat treatment at a lower temperature than in the conventional case, the amount of residual lithium generated during the thermal decomposition of a binder and a conductive material may be reduced, the shape of elementary particles in the cathode active material may be maintained, the crystallite size may be reduced, and strain may be reduced, thereby minimizing the occurrence of cracks. In addition, the amount of a lithium precursor required for a crystal structure recovery process may be reduced. In addition, by immediately annealing the recovered cathode active material without washing, damage to the cathode active material may be minimized, and battery characteristics may be improved.
Hereinafter, each step of the method of recycling a cathode active material will be described in detail.

## (a) Obtaining powder-type cathode active material layer from waste cathode

The method of recycling a cathode active material of the present invention includes step (a) of pulverizing a waste cathode including a current collector and a cathode active material layer coated on the current collector under dry conditions using a pin mill to obtain the cathode active material layer in powder form. In this case, the cathode active material layer and the current collector may be easily separated, and the cathode active material layer may be obtained in powder form. In addition, in the subsequent heat treatment process, a binder and a conductive material may be removed at a lower temperature than the conventional method. At this time, when using a different type of pulverizing machine such as a blender, a mixer, or a disk mill other than a pin mill, since the cathode active material layer and the current collector are not completely separated from the waste cathode, a part of the current collector is mixed into the cathode active material layer, and a part of the current collector remains in the recycled cathode active material, deteriorating battery characteristics.

A pin mill commonly used in the technical field to which the present invention pertains may be used in the present invention without any particular limitation. Specifically, a pin mill may be composed of a rotor to which a pin (impact pillar) is attached radially and a stator equipped to engage with the rotor. Raw materials are supplied to the center of the rotor and stator, and spread along with air flow generated during rotation, which in turn increases the circumferential speed of the pin. As a result, the raw materials are continuously subjected to strong impulsive force, undergo pulverizing, and then pass through the screen again and are discharged. The pin mill may perform pulverizing to the desired particle size by adjusting the shape, quantity, and screen size of the pin. When pulverizing cathode scraps with a pin mill, the current collector pieces are chopped and the cathode active material layer is separated from the current collector pieces. Pieces of the current collector remain inside the screen, and the cathode active material layer that passed through the screen is discharged as powder. The cathode active material layer powder is a mixture of a cathode active material, a binder, and a conductive material. In this way, the cathode active material layer and the current collector may be separated by pulverizing using a pin mill under dry conditions.

For example, the pulverizing by the pin mill may be performed at 5000 to 10000 rpm, preferably 5000 to 8000 rpm, more preferably 5000 to 7000 rpm, still more preferably 5500 to 6500 rpm. Within this range, the cathode active material layer and the current collector may be easily separated, allowing only the cathode active material layer powder to be separated. Specifically, when the conditions are less than the above range, the cathode active material layer and the current collector may not be separated and productivity may decrease. When the above conditions exceed the above range, there is a problem that the current collector is mixed into the cathode active material layer powder.

Preferably, the pulverizing by the pin mill may be performed in a dry room under nitrogen atmosphere. In this case, heat generated during the pulverizing process may inhibit the conversion of lithium carbonate present in the cathode active material layer to lithium hydroxide, and the cathode active material layer may be easily separated from the current collector.

In the present disclosure, the dry room means that the temperature is 20 to 22 °C, and the wet bulb temperature is maintained at -60 to -50 °C.

Preferably, the average particle diameter of the cathode active material layer obtained in powder form may be the same or similar to the average particle diameter of the cathode active material layer as a raw material. In this case, the battery characteristics of the recycled cathode active material may be excellent.

For example, before pulverizing the waste cathode using the pin mill, a preprocessing step of performing shredding or cutting may be included. In this case, the cathode active material layer and the current collector may be easily separated.

For example, the shredding or cutting may be performed using various dry pulverizing equipment such as a hand-mill, a disk-mill, a cutting-mill, and a hammer-mill. In addition, to increase productivity, a high-speed cutter may be used.

In the present disclosure, dry conditions are not particularly limited as long as the dry conditions are dry conditions commonly defined in the technical field to which the present invention pertains. For example, the dry conditions may be conditions in which no solvent is added and/or dry conditions and/or conditions for using dry pulverizing equipment.

The waste cathode may be preferably a cathode separated from a lithium secondary battery discarded after use, or a defective cathode sheet or a cathode scrap generated in a process of manufacturing a lithium secondary battery, more preferably a cathode scrap remaining after blanking a cathode sheet to obtain a cathode plate.

The cathode active material layer of step (a) may preferably include a cathode active material, a binder, and a conductive material.

Preferably, the cathode active material may include one or more selected from the group consisting of nickel·cobalt·manganese (NCM)-based cathode active materials, nickel·cobalt·aluminum (NCA)-based cathode active materials, and nickel·cobalt·manganese·aluminum (NCMA)-based cathode active materials, and may include Ni in an amount of 60 mol% or more based on 100 mol% in total of other metals other than Li. In this case, reversible capacity and thermal stability may be excellent.

As another specific example, the cathode active material may be a compound represented by Chemical Formula 1 below. In this case, electrochemical performance, resistance characteristics, and capacity characteristics may be excellent.

[Chemical Formula 1] $\qquad$ $Li_aNi_xMn_yCo_zM_wO_{2+\delta}$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$.

For example, based on 100 mol% in total of other metals other than Li, the cathode active material may include Ni in an amount of 60 mol% or more, preferably 80 mol% or more, more preferably 81 mol% or more, still more preferably 81 to 95 mol%. Within this range, charging capacity, resistance characteristics, and capacity characteristics may be excellent.

In the present disclosure, the Ni content may be measured by ion chromatography (IC) commonly used in the technical field to which the present invention pertains. As a specific example, an inductively coupled plasma (IC-ICP) analyzer, an IC-ICP-MS analyzer, or an IC-ICP-AEC analyzer may be used.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

### (b) Heat-treating obtained cathode active material layer powder

The method of recycling a cathode active material of the present invention includes step (b) of heat-treating the obtained cathode active material layer powder at 460 to 530 °C in air to recover a cathode active material. In this case, since a binder and a conductive material may be removed at a lower temperature than in the conventional method, damage to the cathode active material may be minimized. In addition, the amount of residual lithium generated by thermal decomposition of the binder and the conductive material may be reduced, and the shape of elementary particles in the cathode active material may be maintained. In addition, the crystallite size and strain may be reduced, thereby minimizing occurrence of cracks. In addition, the battery characteristics of a recycled cathode active material may be improved.

The heat treatment temperature may be preferably 480 to 530 °C, more preferably 480 to 500 °C. Within this range, damage to the cathode active material may be minimized, the amount of residual lithium generated by thermal decomposition of the binder and the conductive material may be reduced. In addition, the shape of elementary particles may be maintained without being broken, and the crystallite size and strain may be reduced, thereby minimizing occurrence of cracks in the cathode active material. In addition, the battery characteristics may be improved.

For example, the heat treatment time may be 1.5 hours to 6 hours, preferably 2 hours to 5.5 hours, more preferably 2 hours to 5 hours, still more preferably 2.5 hours to 5 hours, still more preferably 3 hours to 5 hours. Within this range, thermal decomposition of a binder and a conductive material may be actively performed, damage to the cathode active material may be minimized, the amount of residual lithium generated during decomposition of the binder and the conductive material may be reduced, the shape of elementary particles may be maintained without being broken, the crystallite size and strain may be reduced, occurrence of cracks in the cathode active material may be reduced, and thus battery characteristics may be improved.

In the present disclosure, the heat treatment time is time of heat treatment performed at the corresponding heat treatment temperature, and does not include time required to reach the corresponding heat treatment temperature.

The heat treatment may be performed at a temperature increase rate of 1 to 20 °C/min, preferably 1 to 10 °C/min, more preferably 3 to 8 °C/min, still more preferably 4 to 6 °C/min. Within this range, heat treatment may be performed without causing strain to heat treatment equipment, and thermal shock to cathode active material layer powder may be prevented.

For example, heat treatment equipment commonly used in the technical field to which the present invention pertains may be used in the present invention without particular limitation. For example, various types of furnaces, specifically a box-type furnace or a rotary kiln, may be used.

The rotary kiln has the advantage of excellent productivity by enabling continuous processing.

In step (b), a total amount of LiOH and $Li_2CO_3$, which are the surface residues of the cathode active material recovered after heat treatment, may be, for example, 1.35 % by weight or less, preferably 1.28 % by weight or less, more preferably 1.10 % by weight or less, still more preferably 0.1 to 1.10 % by weight. Within this range, a cathode active material having excellent initial discharge capacity, rate performance, capacity characteristics, and resistance characteristics may be provided.

In step (b), the amount of $Li_2CO_3$ remaining in the surface of the cathode active material recovered after heat treatment may be, for example, 0.40 % by weight or less, preferably 0.32 % by weight or less, more preferably 0.25 % by weight or less, still more preferably 0.20 % by weight or less, still more preferably 0.15 % by weight or less, still more preferably 0.05 to 0.15 % by weight. Within this range, a cathode active material having excellent initial discharge capacity, rate performance, capacity characteristics, and resistance characteristics may be provided.

In step (b), the amount of LiOH remaining in the surface of the cathode active material recovered after heat treatment may be, for example, 0.99 % by weight or less, preferably 0.96 % by weight or less, more preferably 0.05 to 0.96 % by weight. Within this range, a cathode active material having excellent initial discharge capacity, rate performance, capacity characteristics, and resistance characteristics may be provided.

In the present disclosure, the amounts of LiOH and $Li_2CO_3$ remaining on the surface of the cathode active material may be measured using a pH titrator (T5, Mettler Toledo Co.). Specifically, 5 g of the cathode active material is dispersed in 100 ml of distilled water and mixed at 300 rpm for 5 minutes, and then filtering is performed to filter out an active material and obtain a filtrate. Change in pH values is measured while titrating the filtrate with a 0.1 M HCl solution. Based on the measurement result, a pH titration curve is obtained. Using the pH titration curve, the amounts of residual LiOH and $Li_2CO_3$ in the cathode active material are calculated.

The cathode active material recovered in step (b) may preferably be subjected to annealing of step (c) without washing. In this case, damage to the surface of the cathode active material may be minimized, and the phenomenon of the antagonists and elementary particles of the cathode active material consisting of secondary particles being released and becoming primary particles may be prevented.

In the present disclosure, the 'primary particle' refers to the primary structure of a single particle, and the 'secondary particle' refers to an agglomerate or assembly, i.e., secondary structure, of primary particles by physical or chemical bonds between primary particles.

**(c) Adding lithium precursor to recovered cathode active material and performing annealing**

The method of recycling a cathode active material of the present invention includes step (c) of adding a lithium precursor to the recovered cathode active material and performing annealing at 400 to 1000 °C. In this case, a cathode active material having excellent initial discharge capacity, rate performance, capacity characteristics, and resistance characteristics may be provided. In addition, since a process of washing the recovered active material is omitted, the economic efficiency and productivity may be greatly improved. In addition, damage to the cathode active material may be minimized.

Annealing step (c) may be preferably a step of adding a lithium precursor to the recovered cathode active material without washing and performing annealing at 400 to 1000 °C under oxygen ($O_2$) atmosphere or in air. In this case, the crystallinity of the cathode active material may be increased or the crystal structure thereof may be recovered, thereby improving the crystallinity thereof and improving the battery characteristics of a recycled cathode active material.

The lithium precursor may preferably include one or more selected from the group consisting of LiOH, $Li_2CO_3$, $LiNO_3$, and $Li_2O$.

The lithium precursor may be preferably added in an amount corresponding to the reduced amount of lithium based on an amount of lithium in the cathode active material of step (b) based on the amount of lithium in the cathode active material as a raw material. As a specific example, when the cathode active material recovered in step (b) is the cathode active material represented by Chemical Formula 1, the lithium precursor may be added in an amount corresponding to a molar ratio of lithium of 0.0001 to 0.2, preferably 0.001 to 0.02, more preferably 0.005 to 0.17, still more preferably 0.007 to 0.015, still more preferably 0.009 to 0.013 based on the molar ratio of lithium in the cathode active material. Within this range, by supplementing lithium in the recycled cathode active material, crystallinity may be increased, or a crystal structure may be recovered, thereby improving crystallinity. Thus, the battery characteristics of the recycled cathode active material may be improved.

The lithium precursor may be added in an amount corresponding to preferably 3 to 17 mol%, more preferably 5 to 15 mol%, still more preferably 8 to 13 mol% based on 100 mol% in total of lithium contained in the cathode active material as a raw material. Within this range, since there is no residual precursor that causes an increase in the resistance of the recycled cathode active material, battery characteristics may be improved. Since the crystal structure may be restored with a smaller amount of a lithium precursor than in the conventional case, an economic advantage may be obtained.

The annealing temperature may be adjusted within a limited range according to the melting point of the lithium precursor. For example, in the case of $LiCO_3$ as the lithium precursor, the melting point thereof is 723 °C, and thus annealing may be performed at preferably 700 to 900 °C, more preferably 710 to 780 °C. In the case of LiOH as the lithium precursor, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature may be preferably a temperature exceeding the melting point of the lithium precursor. However, when the annealing temperature exceeds 1000 °C, thermal decomposition of the cathode active material may occur, resulting in deterioration of battery performance. Accordingly, the annealing temperature is preferably 1000 °C or lower.

**(d) Washing annealed cathode active material with washing solution**

The method of recycling a cathode active material of the present invention includes step (d) of washing the annealed cathode active material with a washing solution. In this case, a lithium precursor remaining on the cathode active material may be removed using a small amount of washing solution. Accordingly, in the subsequent process, deterioration of battery performance and gas generation due to reaction between a residual lithium precursor and an electrolyte solution may be prevented, and wastewater treatment may be omitted.

The washing may preferably include a step of mixing the annealed cathode active material and the washing solution and then performing filtration and a step of drying a solid cathode active material obtained after filtration. In this case, excess lithium remaining in the cathode active material may be effectively removed.

The drying may be performed at preferably 100 to 500 °C, more preferably 120 to 400 °C, still more preferably 120 to 300 °C, still more preferably 120 to 200 °C. Within this range, residual Li may be efficiently removed.

The drying may preferably be vacuum drying.

In the present disclosure, vacuum drying methods commonly practiced in the technical field to which the present invention pertains may be used in the present invention without particular limitation.

The washing may preferably include a step of mixing the annealed cathode active material and the washing solution in a weight ratio of 1:1.5 to 1:5.5 and performing filtration and a step of drying the solid cathode active material obtained after the filtration. In this case, an excess of lithium is added to suppress the cation mixing phenomenon that tends to occur in high-nickel cathode active materials. At this time, lithium precursors such as LiOH and $Li_2CO_3$ remaining due to the excess lithium may be effectively removed. The cation mixing phenomenon is a phenomenon that occurs because the particle sizes of nickel and lithium are similar.

In the present disclosure, the high-nickel cathode active material refers to a cathode active material containing 60 mol% or more of Ni based on 100 mol% in total of other metals other than Li.

The annealed active material and the washing solution may be mixed in a weight ratio of preferably 1:1.5 to 1:4, more preferably 1:1.5 to 1:3, still more preferably 1:1.5 to 1:2.5. In this case, an excess of lithium is added to suppress the cation mixing phenomenon that tends to occur in high-nickel cathode active materials. At this time, lithium precursors such as LiOH and $Li_2CO_3$ remaining due to the excess lithium may be effectively removed.

In particular, when the annealed active material and the washing solution are mixed in a weight ratio of 1:1.5 to 1:3, preferably 1:1.5 to 2.5, the initial discharge capacity (DCH) and efficiency of the recycled cathode active material may be further improved.

In addition, in the conventional method in which a cathode active material recovered after heat-treating a waste cathode is washed and annealed, to remove residual lithium during a washing step, a washing solution 30 times larger than that of a cathode active material is required. However, according to the present invention, since a recovered cathode active material is annealed and then washed, a small amount of washing solution is used, wastewater treatment is unnecessary, and residual lithium removal efficiency may be excellent compared to the conventional method.

For example, the washing solution may be water or an aqueous basic lithium compound solution, preferably water. In this case, lithium precursors such as LiOH, $Li_2CO_3$ remaining on the surface of the cathode active material may be completely removed with a small amount of washing solution. Thus, wastewater treatment is unnecessary, and the rate performance of a battery may be greatly improved.

The water is more preferably distilled water or deionized water. In this case, lithium precursors such as LiOH, $Li_2CO_3$ remaining on the surface of the cathode active material may be completely removed with a small amount of washing solution. Thus, wastewater treatment is unnecessary, and the rate performance of a battery may be greatly improved.

The aqueous basic lithium compound solution may preferably include a lithium compound in an amount of greater than 0 % by weight and 15 % by weight or less, more preferably an amount of greater than 0 % by weight and 10 % by weight or less. In this case, lithium precursors such as LiOH, $Li_2CO_3$ remaining on the surface of the cathode active material may be completely removed with a small amount of washing solution. Thus, wastewater treatment is unnecessary, and the rate performance of a battery may be greatly improved.

Mixing of the annealed cathode active material and the washing solution is preferably performed by agitation, and the agitation is not particularly limited but may be mechanical or ultrasonic agitation.

The agitation may be performed within preferably 30 minutes, more preferably 20 minutes, still more preferably 15 minutes, still more preferably 5 to 10 minutes. Within this range, residual lithium may be effectively removed.

**(e) Obtaining reusable cathode active material by coating surface of washed cathode active material**

The method of recycling a cathode active material according to the present invention optionally includes step (e) of obtaining a reusable cathode active material by coating the surface of the washed cathode active material. In this case, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then may be heat-treated at 100 to 1200 °C, more preferably 200 to 1000 °C, still more preferably 250 to 800 °C. In this case, structural stability and electrochemical performance may be improved while maintaining the intrinsic properties of the cathode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the cathode active material excluding a solvent, based on 1 mol% of the metal in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The heat treatment time may be preferably 1 to 16 hours, more preferably 3 to 7 hours. Within this range, structural stability and electrochemical performance may be improved while maintaining the intrinsic properties of the cathode active material.

Coating methods commonly used in the art to which the present invention pertains may be used as the coating method of the present invention without particular limitation. For example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 $m^2/g$, more preferably an average diameter of 10 to 100 nm and a specific surface area of 20 to 100 $m^2/g$. Within this range, the coating agent may be uniformly adhered to the surface of the cathode active material, thereby improving the structural stability of the cathode active material. Thus, reduction of the lifespan of the cathode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

As another example, the method of recycling a cathode active material of the present invention includes step (a) of applying an impulsive force of 5.1 to 10.2 newton (N) and a centrifugal force of 2600 to 10700 newton (N) to a waste cathode including a current collector and a cathode active material layer coated on the current collector under dry conditions to obtain the cathode active material layer in powder form; step (b) of heat-treating the obtained cathode active material layer powder at 460 to 530 °C in air to recover a cathode active material; step (c) of adding a lithium precursor to the recovered cathode active material and performing annealing at 400 to 1000 °C; and step (d) of washing the annealed cathode active material with a washing solution. In this case, by performing heat treatment at a lower temperature than in the conventional case, the amount of residual lithium generated during the thermal decomposition of a binder and a conductive material may be reduced, the shape of elementary particles in the cathode active material may be maintained, the crystallite size may be reduced, and strain may be reduced, thereby minimizing the occurrence of cracks. In addition, the amount of a lithium precursor required for a crystal structure recovery process may be reduced. In addition, by immediately annealing the recovered cathode active material without washing, damage to the cathode active material may be minimized, and battery characteristics may be improved.

In step (a), the impulsive force may be preferably 5.1 to 8.1 newton (N), more preferably 5.1 to 7.1 newton (N), still more preferably 5.6 to 6.6 newton (N). Within this range, the cathode active material layer and the current collector may be easily separated, allowing only the cathode active material layer powder to be separated. Specifically, when the conditions are less than the above range, the cathode active material layer and the current collector may not be separated and productivity may decrease. When the above conditions exceed the above range, there is a problem that the current collector is mixed into the cathode active material layer powder.

In step (a), the centrifugal force may be preferably 2600 to 6900 N, more preferably 2600 to 5300 N, still more preferably 3200 to 4500 N. Within this range, the cathode active material layer and the current collector may be easily separated, allowing only the cathode active material layer powder to be separated. Specifically, when the conditions are less than the above range, the cathode active material layer and the current collector may not be separated and productivity may decrease. When the above conditions exceed the above range, there is a problem that the current collector is mixed into the cathode active material layer powder.

Specifically, a waste cathode may be pulverized at an impulsive force of 5.1 to 10.2 newton (N) using a grinder under the dry conditions, and may be released at a centrifugal force of 2600 to 10700 newton (N).

In the present disclosure, methods for measuring impulsive force and centrifugal force commonly used in the technical field to which the present invention pertains may be used in the present invention without particular limitation. For example, impulsive force and centrifugal force may be calculated using Equations 1 and 3. At this time, the mass (kg) of a waste cathode, the revolutions per minute (rpm) of a pin mill, and the radius (m) of the pin mill follows the relationship in Equations 1 and 3. At this time, the pulverizing time is 1 second, and the speed after the waste cathode hits the pin is 0.

[Equation 1]

$$\text{Centrifugal force (N)} = m \times v^2 / r$$

In Equation 1, m is the mass (kg) of the waste cathode, v is a value converted from the number of revolutions per minute (rpm) of the pin mill to speed (m/s) using Equation 2 below, and r is the radius of the pin mill (m).

[Equation 2]

$$\text{Speed (m/s)} = (2r \times \pi \times rpm) / 60$$

In Equation 2, r is the radius of the pin mill (m), $\pi$ is a circular constant, and rpm is the number of revolutions per minute (rpm) of the pin mill.

[Equation 3]

$$\text{Impulsive force (N)} = m \times (v_1 - v_2) / \triangle t$$

In Equation 3, m is the mass (kg) of the waste cathode, $v_1$ is the speed (m/s) just before the waste cathode collides with the pin, $v_2$ is the speed (m/s) after the waste cathode collides with the pin, and $\triangle t$ is collision time (sec.), that is, pulverizing time, which is the time taken from $v_1$ to $v_2$.

In the present invention, $v_2$ is 0, and the collision time is 1 second.

Steps (b), (c), and (d) share all technical features of steps (b), (c), and (d) of the method of recycling a cathode active material described above, and thus repeated descriptions thereof will be omitted.

**Recycled cathode active material**

The recycled cathode active material of the present invention is prepared using the method of recycling a cathode active material. In this case, by performing heat treatment at a lower temperature than in the conventional case, the amount of residual lithium generated during the thermal decomposition of a binder and a conductive material may be reduced, the shape of elementary particles in the cathode active material may be maintained, the crystallite size may be reduced, and strain may be reduced, thereby minimizing the occurrence of cracks. In addition, the amount of a lithium precursor required for a crystal structure recovery process may be reduced. In addition, by immediately annealing the recovered cathode active material without washing, damage to the cathode active material may be minimized, and battery characteristics may be improved.

In addition, the recycled cathode active material of the present invention may include one or more selected from the group consisting of nickel·cobalt·manganese (NCM)-based cathode active materials, nickel·cobalt·aluminum (NCA)-based cathode active materials, and nickel·cobalt·manganese·aluminum (NCMA)-based cathode active materials, and may include Ni in an amount of 60 mol% or more based on 100 mol% in total of other metals other than Li. A total amount of residual LiOH and $Li_2CO_3$ in the recycled cathode active material may be 1.35 % by weight or less, and the recycled cathode active material may have a crystal structure having an a-axis length of 2.872 to 2.878 Å, a c-axis length of 14.200 to 14.210 Å, a cell volume of 101.45 to 101.82 Å$^3$, and a crystallite size of 72 to 80 nm as measured by XRD. In this case, by performing heat treatment at a lower temperature than in the conventional method, damage to the cathode active material may be minimized, the amount of residual lithium generated during decomposition of the binder and the conductive material may be reduced, the shape of elementary particles may be maintained without being broken, and the crystallite size and strain may be reduced, thereby minimizing occurrence of cracks in the cathode active material. In addition, by annealing the recovered cathode active material without washing, damage to the cathode active material may be reduced, and battery characteristics may be improved.

As another specific example, the recycled cathode active material may be a compound represented by Chemical Formula 1 below.

[Chemical Formula 1]    $Li_aNi_xMn_yCo_zM_wO_{2+\delta}$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$. In this case, electrochemical performance, resistance characteristics, and capacity characteristics may be excellent.

Based on 100 mol% in total of other metals other than Li, the recycled cathode active material may include Ni in an amount of preferably 80 mol% or more, more preferably 81 mol% or more, still more preferably 81 to 95 mol%. Within this range, charging capacity, resistance characteristics, and capacity characteristics may be excellent.

For example, in the recycled cathode active material, the amount of residual $Li_2CO_3$ may be 0.40 % by weight or less, preferably 0.32 % by weight or less, more preferably 0.25 % by weight or less, still more preferably 0.20 % by weight or less, still more preferably 0.15 % by weight or less, still more preferably 0.05 to 0.15 % by weight. Within this range, a cathode active material having excellent initial discharge capacity, rate performance, capacity characteristics, and resistance characteristics may be provided.

For example, in the recycled cathode active material, the amount of residual LiOH may be 0.99 % by weight or less, preferably 0.96 % by weight or less, more preferably 0.05 to 0.96 % by weight. Within this range, a cathode active material having excellent initial discharge capacity, rate performance, capacity characteristics, and resistance characteristics may be provided.

For example, in the recycled cathode active material, the total amount of residual $Li_2CO_3$ and LiOH may be 1.35 % by weight or less, preferably 1.28 % by weight or less, more preferably 1.10 % by weight or less, still more preferably 0.1 to 1.10 % by weight. Within this range, a cathode active material having excellent initial discharge capacity, rate performance, capacity characteristics, and resistance characteristics may be provided.

For example, the recycled cathode active material may have a crystal structure having an a-axis length of 2.871 to 2.888 Å, preferably 2.872 to 2.878 Å, more preferably 2.874 to 2.876 Å as measured by XRD. Within this range, the recycled cathode active material may be restored to a lattice structure similar to that of the cathode active material as a raw material.

For example, the recycled cathode active material may have a crystal structure having a c-axis length of 14.200 to 14.210 Å, preferably 14.203 to 14.206 Å as measured by XRD. Within this range, the recycled cathode active material may be restored to a lattice structure similar to that of the cathode active material as a raw material.

For example, the recycled cathode active material may have a cell volume of 101.45 to 101.82 Å$^3$, preferably 101.55 to 101.67 Å$^3$ as measured by XRD. Within this range, the recycled cathode active material may be restored to a lattice structure similar to that of the cathode active material as a raw material.

For example, the recycled cathode active material may have a crystallite size of 72 to 84 nm, preferably 72 to 82 nm, more preferably 72 to 80 nm, still more preferably 72 to 78 nm, still more preferably 72 to 74 nm as measured by XRD. Within this range, the recycled cathode active material may be restored to a lattice structure similar to that of the cathode active material as a raw material.

For example, the surface of the recycled cathode active material may be coated with a metal or carbon, preferably a metal. In this case, the structural stability of the cathode active material may be improved without chemical or physical changes in the cathode active material, and electrochemical characteristics such as rate performance, lifespan characteristics, and capacity may be improved. In addition, by substitution with a heterogeneous element on the surface of the cathode active material, the amount of residual lithium may be reduced and the pH may be reduced, resulting in improved physicochemical properties.

The metal may preferably include one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol% based on 1 mol% of metals in the cathode active material before coating. Within this range, structural stability and electrochemical performance may be improved while maintaining the intrinsic properties of the cathode active material.

The surface coating may preferably performed by coating the surface with a coating agent including one or more of a metal, an organic metal, and a carbon component in a solid or liquid manner and heat-treating the surface at 100 to 1200 °C, more preferably 200 to 1000 °C, still more preferably 250 to 800 °C. In this case, structural stability and electrochemical performance may be improved while maintaining the intrinsic properties of the cathode active material.

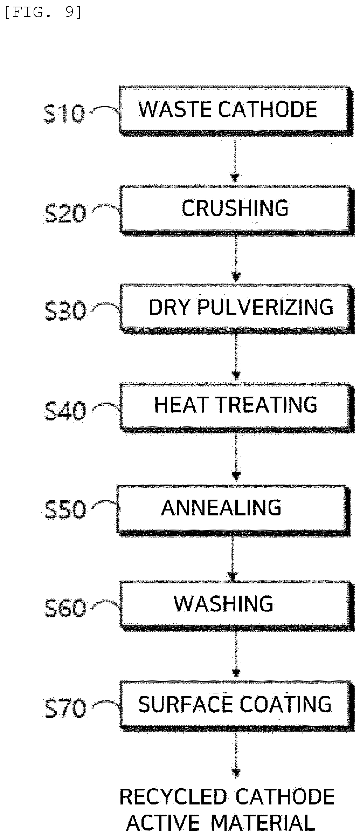

FIG. 9 below is a flowchart for explaining a process for recycling a cathode active material according to one embodiment of the present invention.

Referring to FIG. 9, first, cathode scraps as waste cathodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes aluminum foil and a cathode active material layer formed on the aluminum foil. After volatilizing a solvent, the cathode active material layer has a structure in which a cathode active material and a conductive material are combined by a binder.

Next, the prepared cathode scraps are crushed into pieces of appropriate sizes (step S20). Here, the crushing includes cutting or shredding cathode scraps into easy-to-handle sizes. As a specific example, the crushed cathode scraps may have a size of 1 cm $\times$ 1 cm. For example, the crushing may be performed using a dry crushing device such as a hand-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the crushed cathode scraps are pulverized under dry conditions using a pin mill to obtain a cathode active material layer in powder form (step S30).

The pin mill is composed of a rotor to which a pin (impact pillar) is attached radially and a stator equipped to engage with the rotor. Raw materials are supplied to the center of the rotor and stator, and spread along with air flow generated during rotation, which in turn increases the circumferential speed of the pin. As a result, the raw materials are continuously subjected to strong impulsive force, undergo pulverizing, and then pass through the screen again and are discharged. The pin mill may perform pulverizing to the desired particle size by adjusting the shape, quantity, and screen size of the pin. When pulverizing cathode scraps with a pin mill, the current collector pieces are chopped and the cathode active material layer is separated from the current collector pieces. Pieces of the current collector remain inside the screen, and the cathode active material layer that passed through the screen is discharged as powder. The cathode active material layer powder is a mixture of a cathode active material, a binder, and a conductive material. In this way, the cathode active material layer and the current collector may be separated by pulverizing using a pin mill under dry conditions.

For example, the pulverizing by the pin mill may be performed at 5000 to 10000 rpm, preferably 5000 to 8000 rpm, more preferably 5000 to 7000 rpm, still more preferably 5500 to 6500 rpm, as a specific example, 6000 rpm. Within this range, since the cathode active material layer and the current collector are effectively separated, only the cathode active material layer powder may be separated. When the pulverizing speed is less than 5000 rpm, the cathode active material layer and the current collector may not be easily separated, and pulverizing must be performed over a long period of time. When the pulverizing speed exceeds 10000 rpm, the current collector may be mixed with the cathode active material layer powder.

Next, the obtained cathode active material layer powder is heat-treated at 460 to 530 °C in air to recover a cathode active material (step S40). Here, heat treatment is performed to thermally decompose the binder and the conductive material within the active material layer.

As described above, by performing heat treatment in air, the binder and the conductive material in the active material layer are thermally decomposed into $CO_2$ and $H_2O$ and removed. Since the binder is removed, the cathode active material is separated from the cathode active material layer.

It is important that the heat treatment is performed under an air atmosphere. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when the heat treatment is performed in the air, both the binder and the conductive material are removed because carbon components in the binder and conductive material reacts with oxygen, are converted into gases such as CO and $CO_2$, and disappears.

Since the current collector was separated in the previous process, the heat treatment may be performed at a lower temperature than in the conventional method, as a specific example, at 460 to 530 °C, preferably 480 to 530 °C, more preferably 480 to 500 °C. When the heat treatment is performed at a temperature less than 460 °C, thermal decomposition of the binder and the conductive material may not be efficient. When the heat treatment is performed at a temperature exceeding 530 °C, the amount of residual lithium generated by thermal decomposition of the binder and the conductive material may be increased, the shape of elementary particles may be broken, the crystallite size and strain may be increased, and cracks may occur in the cathode active material. In addition, by removing the binder and the conductive material by performing heat treatment at a lower temperature than in the conventional method, costs may be reduced.

The heat treatment is performed at a temperature increase rate of preferably 1 to 20 °C/min, more preferably 1 to 10 °C/min, still more preferably 3 to 8 °C/min, still more preferably 4 to 6 °C/min, as a specific example, 5 °C/min. Within this range, heat treatment may be performed without causing strain to heat treatment equipment, and thermal shock to cathode active material layer powder may be prevented.

The heat treatment may be performed until the binder is completely thermally decomposed. For example, the heat treatment may be performed for preferably 1.5 hours to 6 hours, preferably 2 hours to 5.5 hours, more preferably 3 hours to 5 hours, still more preferably 4 hours to 5 hours. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, a lithium precursor is added to the recovered cathode active material and annealing is performed (step S50).

In the annealing step, it is important to immediately add a lithium precursor to the recovered cathode active material and perform annealing without a washing process. In this case, since crystalline LiF generated on the surface of the cathode active material in the previous heat treatment step S40 is contained in the recycled cathode active material, when the recycled cathode active material is applied to a secondary battery, battery characteristics may be improved, and damage to the cathode active material due to washing may be minimized.

In addition, loss of lithium in the cathode active material occurs during preceding step S40. In step S50, the loss amount of lithium is supplemented. In addition, during the preceding step, a deformed structure (e.g., $Co_3O_4$ in the case of an LCO active material) may be formed on the surface of the cathode active material. In step S50, the crystal structure of the cathode active material may be recovered through annealing, thereby improving the battery characteristics of a recycled cathode active material, or restoring the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples.

The lithium precursor may include one or more of LiOH, $Li_2CO_3$, $LiNO_3$, and $Li_2O$, as a specific example, LiOH.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added. For example, when the molar ratio of lithium to other metals in a fresh cathode active material is 1, the lithium precursor may be added in an amount such that the molar ratio of lithium is 0.001 to 0.4, preferably 0.01 to 0.2.

As a specific example, when the lithium precursor is added at a molar ratio of 0.09 to 0.1 (based on lithium metal), which is a loss ratio relative to a lithium content in a fresh cathode active material, based on ICP analysis results, the capacity may be increased to a level equivalent to that of the fresh cathode active material. Here, the ICP analysis results have an error value of about $\pm 0.02$.

In the previous step S40, since the loss of lithium is reduced by performing heat treatment at a lower temperature than in the conventional method, the lithium precursor may be added in an amount of preferably 3 to 17 mol%, more preferably 5 to 15 mol%, still more preferably 8 to 13 mol% based on 100 mol% in total of lithium in the cathode active material as a raw material used in the cathode active material layer.

For example, the annealing may be performed in air at 400 to 1000 °C, preferably at 600 to 900 °C. In this case, the temperature should be determined within a limited range according to the types of the lithium precursor.

The annealing temperature is preferably a temperature exceeding the melting point of the lithium precursor. However, since performance degradation occurs due to thermal decomposition of the cathode active material at a temperature exceeding 1000 °C, the annealing temperature should not exceed 1000 °C. When $Li_2CO_3$ is used as the lithium precursor, the annealing temperature is preferably 700 to 900 °C, more preferably 710 to 780 °C, still more preferably 750 to 780 °C. In addition, when LiOH is used as the lithium precursor, the annealing temperature is preferably 400 to 600 °C, more preferably 450 to 480 °C, still more preferably 470 to 480 °C.

For example, the annealing time is preferably 1 hour or more, more preferably 15 hours or less, still more preferably 4 to 6 hours. When the annealing time is long, a crystal structure may be sufficiently recovered, but even long-term annealing does not significantly affect performance. In this case, the same or similar equipment as in step S40 of performing heat treatment may be used as the annealing equipment.

Next, the annealed cathode active material is washed with a washing solution (step S60).

Since the lithium precursor that failed to participate in the reaction in the annealing step S50 exists in the form of LiOH and $Li_2CO_3$ on the surface of the cathode active material, a residual lithium removal process is required to remove LiOH and $Li_2CO_3$. Impurities in the form of LiOH and $Li_2CO_3$ may react with an electrolyte solution, deteriorating battery performance and generating gas, so these impurities must be thoroughly removed.

The annealed cathode active material and the washing solution may be mixed in a weight ratio of preferably 1:1.5 to 1:5.5, more preferably 1:1.5 to 1:4, still more preferably 1:1.5 to 1:3, still more preferably 1:1.5 to 1:2.5. In this case, residual lithium may be removed with a small amount of washing solution. Thus, wastewater treatment is unnecessary, and a cathode active material having excellent initial discharge capacity, rate performance, and capacity characteristics may be obtained.

The washing solution is preferably water. In this case, safety may be ensured, costs may be reduced, and transition metals contained in the cathode active material may be prevented from eluting.

The washing may be preferably performed by mixing the annealed cathode active material and the washing solution and drying the obtained solid cathode active material.

Mixing of the annealed cathode active material and the washing solution may preferably be performed by agitation. The agitation is not particularly limited, but may be mechanical agitation or ultrasonic agitation.

The mechanical agitation may preferably be performed at 100 to 1000 RPM for 5 to 30 minutes, more preferably 250 to 350 RPM for 5 to 10 minutes.

The filtration is preferably vacuum filtration using a filter, and the drying is preferably vacuum drying at 50 to 140 °C.

Next, as an optional step, the surface of the washed cathode active material may be coated (step S70).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the washed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

When the molar ratio of lithium to other metals in the cathode active material in annealing step S50 is 1:1, lithium in the cathode active material reacts with the coating agent in surface coating step S70, and the molar ratio of lithium to other metal in the cathode active material is less than 1:1. In this case, the capacity of a battery containing the recycled cathode active material may not be fully (up to 100 %) expressed. However, in annealing step S50, when an excess of the lithium precursor is added so that lithium is contained in a greater molar ratio of 0.0001 to 0.1 compared to other metals in the cathode active material, a surface protection layer is formed in surface coating step S70, and the molar ratio of lithium to other metals in the cathode active material becomes 1:1, thereby preventing battery capacity degradation.

## Secondary battery

The secondary battery of the present invention includes the recycled cathode active material. In this case, by performing heat treatment at a lower temperature than in the conventional case, the amount of residual lithium generated during the thermal decomposition of a binder and a conductive material may be reduced, the shape of elementary particles in the cathode active material may be maintained, the crystallite size may be reduced, and strain may be reduced, thereby minimizing the occurrence of cracks. In addition, battery characteristics may be improved. In addition, by completely removing residual lithium with a small amount of washing solution, wastewater treatment is unnecessary. Additionally, since acids and organic solvents are not used in the process of recovering and regenerating cathode active materials, eco-friendliness may be secured, and economic efficiency and productivity may be excellent.

Description of the secondary battery of the present invention may include all of the description of the cathode active material and the method of recycling the cathode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Preparation Example 1

After blanking a cathode plate, discarded cathode scraps (current collector: aluminum foil, cathode active material: NCM-based lithium composite transition metal oxide (molar ratio of Ni:Co:Mn:Al is 88:7:4:1)) were shredded and cut into a size of 2 cm × 2 cm, and then were ground in a dry state using a pin mill to obtain a cathode active material layer. At this time, grinding by the pin mill was performed under 6000 rpm conditions. After grinding, the average particle diameter (D50) of the obtained cathode active material layer powder was 8.9 $\mu$m, and the average particle diameter (D50) of the raw material cathode active material was 8.4 $\mu$m.

The average diameter of the cathode active material layer powder may be measured by a laser diffraction method. Specifically, cathode active material particles were dispersed in a dispersion medium, the dispersed particles were placed in a commercially available laser diffraction particle size measuring device such as Microtrac MT 3000, and the particles were irradiated with an ultrasonic wave of about 28 kHz with an output of 60 W. Then, the average particle diameter (D50) was calculated based on 50 % of the particle size distribution in the measuring device.

Preparation Example 2

After blanking a cathode plate, discarded cathode scraps (current collector: aluminum foil, cathode active material: NCM-based lithium composite transition metal oxide (molar ratio of Ni:Co:Mn:Al is 88:7:4:1)) were shredded and cut, and then were ground in a dry state for 1 minute using a blender (WARING COMMERCIAL Co., BLENDER 8010S, model name: HGBTWTS3) to obtain a cathode active material layer. At this time, the average particle diameter (D50) of the obtained cathode active material layer powder was 8.9 $\mu$m, and the average particle diameter (D50) of the raw material cathode active material was 8.4 $\mu$m.

[Test Example I: Analysis of heat treatment temperature using TGA]

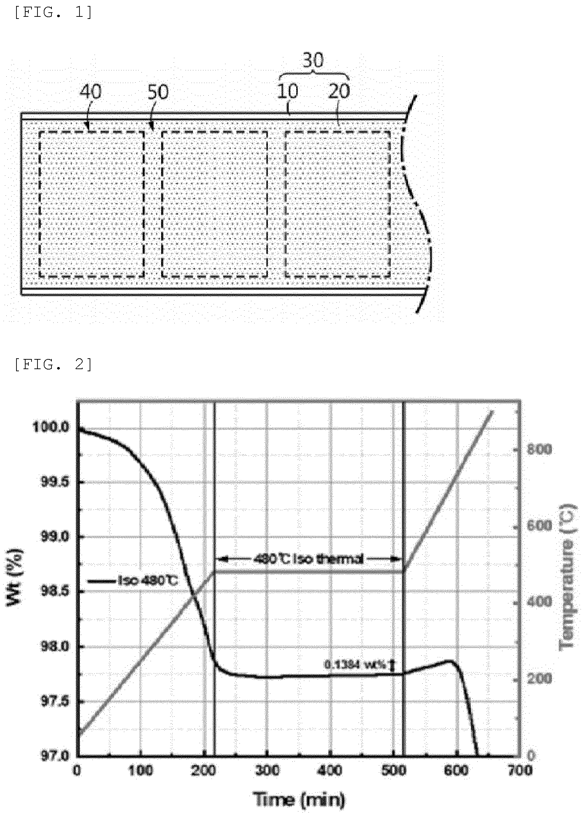

For the cathode active material layer powder obtained in Preparation Example 1, weight change rates depending on heat treatment time were analyzed using TGA, and the results are shown in FIG. 2 below. For TGA analysis, the temperature was increased from 50 °C to 480 °C at a heating rate of 5 °C/min, maintained for 5 hours, and then increased to 900 °C at a heating rate of 5 °C/min.

As shown in FIG. 2 below, the weight decreased due to thermal decomposition of the binder and the conductive material until a heat treatment time of 210 minutes. There was no change in weight from 210 to 510 minutes, but the weight increased slightly after 510 minutes. Based on these results, it was found that the binder and the conductive material were no longer thermally decomposed even when the thermal decomposition time exceeded 510 minutes.

[Test Example II: Analysis of thermal decomposition temperatures of binder and conductive material using TGA]

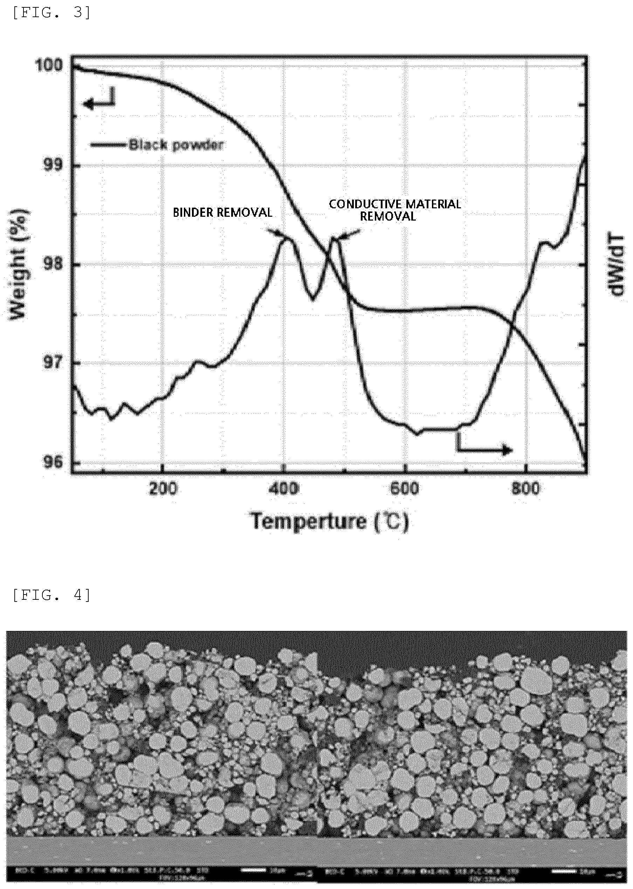

For the cathode active material layer powder obtained in Preparation Example 1, weight change rates depending on heat treatment time were analyzed using TGA, and the results are shown in FIG. 3 below. At this time, the temperature range was from 50 °C to 900 °C, and the heating rate was 5 °C/min.

As shown in FIG. 3 below, thermal decomposition of a binder in cathode active material layer powder began around 360 °C, and thermal decomposition of a conductive material began around 450 °C. Based on these results, it was found that, even when the cathode active material layer powder obtained after a current collector was separated from cathode scraps by pulverizing using a pin mill was heat-treated at a lower temperature than in the conventional method, a cathode active material from which a binder and a conductive material had been sufficiently removed could be obtained.

In addition, referring to FIG. 3, below 460 °C, which is the temperature at which the binder thermally decomposes and loses weight, thermal decomposition of the binder was not sufficient, making it difficult to remove the binder and the conductive material from the cathode active material layer powder.

Example 1-1

The cathode active material layer powder obtained in Preparation Example 1 was heat-treated at 480 °C for 3 hours in air to recover a cathode active material. Here, until the temperature reached the heat treatment temperature, the heating rate was 5 °C/min.

Example 1-2

The same procedure as Example 1-1 was performed except that the cathode active material layer powder obtained in Preparation Example 1 was heat-treated at 500 °C for 2 hours in air to recover a cathode active material.

Example 1-3

The same procedure as Example 1-1 was performed except that the cathode active material layer powder obtained in Preparation Example 1 was heat-treated at 520 °C for 2 hours in air to recover a cathode active material.

Example 1-4

The same procedure as Example 1-1 was performed except that the cathode active material layer powder obtained in Preparation Example 1 was heat-treated at 480 °C for 5 hours in air to recover a cathode active material.

Comparative Example 1-1

After blanking a cathode plate, discarded cathode scraps (current collector: aluminum foil, cathode active material: NCM-based lithium composite transition metal oxide (molar ratio of Ni:Co:Mn:Al is 88:7:4:1)) were shredded and cut, and then were heat-treated at 590 °C for 2 hours in the air to obtain a cathode active material. At this time, the temperature increase rate until reaching the heat treatment temperature was 5 °C/min.

Comparative Example 1-2

The same procedure as Example 1-1 was performed except that the cathode active material layer powder obtained in Preparation Example 1 was heat-treated at 550 °C for 2 hours in air to recover a cathode active material.

Comparative Example 1-3

The cathode active material layer powder obtained in Preparation Example 2 was heat-treated at 480 °C for 3 hours in air to recover a cathode active material. Here, until the temperature reached the heat treatment temperature, the heating rate was 5 °C/min.

[Test Example III: Residual lithium content]

The residual lithium contents of the cathode active materials obtained in Examples 1-1 to 1-4 and Comparative Examples 1-1 and 1-2 were measured, and the results are shown in Table 1 below.

* Residual lithium content: The residual lithium content was measured using a pH titrator (T5, Mettler Toledo Co.). Specifically, 5 g of the cathode active material was dispersed in 100 ml of distilled water and mixed at 300 rpm for 5 minutes, and then filtering was performed to filter out an active material and obtain a filtrate. Change in pH values was measured while titrating the filtrate with a 0.1 M HCl solution. Based on the measurement result, a pH titration curve was obtained. Using the pH titration curve, the amounts of residual LiOH and $Li_2CO_3$ in the cathode active material were calculated.

[Table 1]

| Classification | $Li_2CO_3$ (% by weight) | LiOH (% by weight) | Total amount (% by weight) |
|---|---|---|---|
| Example 1-1 | 0.115 | 0.958 | 1.073 |
| Example 1-2 | 0.175 | 0.982 | 1.157 |

(continued)

| Classification | Li$_2$CO$_3$ (% by weight) | LiOH (% by weight) | Total amount (% by weight) |
|---|---|---|---|
| Example 1-3 | 0.376 | 0.892 | 1.268 |
| Example 1-4 | 0.123 | 0.957 | 1.08 |
| Comparative Example 1-1 | 0.784 | 0.899 | 1.683 |
| Comparative Example 1-2 | 0.502 | 0.914 | 1.416 |

As shown in Table 1, in the case of Examples 1-1 to 1-4 according to the present invention, compared to Comparative Example 1-1 corresponding to the prior art, the contents of LiOH and Li$_2$CO$_3$ remaining in the cathode active material were significantly reduced. In addition, compared to Comparative Example 1-2 outside the heat treatment temperature range of the present invention, the contents of LiOH and Li$_2$CO$_3$ remaining in the cathode active material were reduced.

Example 2-1

LiOH as a lithium precursor was immediately added to the cathode active material recovered in Example 1-1 without a washing process, and annealing was performed at 650 °C for 5 hours in air. At this time, based on 100 mol% in total of lithium in the cathode active material as a raw material used in the cathode active material layer, the lithium precursor was added in an amount of 5 mol%.

The annealed cathode active material and distilled water were mixed at a weight ratio of 1:2, stirred at 300 rpm for 5 minutes, and then filtered under reduced pressure to obtain solids. The solids were subjected to vacuum drying at 100 to 130 °C for 12 hours to obtain a washed cathode active material. At this time, air was supplied at a rate of 3 L/min.

The washed cathode active material was coated with boric acid and heated at 300 °C for 5 hours to obtain a recycled cathode active material as a final product. At this time, boric acid was added in an amount corresponding to 1000 ppm of boron lost in the previous process, temperature was increased to the heat treatment temperature at a temperature increase rate of 2 °C/min, and air was supplied at a rate of 3 L/min.

Example 2-2

The same procedure as Example 2-1 was performed except that the cathode active material recovered in Example 1-4 was used instead of the cathode active material of Example 2-1, LiOH as a lithium precursor was added in an amount of 7 mol% based on 100 mol% in total of lithium in the cathode active material as a raw material used in the cathode active material layer, and annealing was performed.

Example 2-3

The same procedure as Example 2-1 was performed except that the cathode active material recovered in Example 1-4 was used instead of the cathode active material of Example 2-1, LiOH as a lithium precursor was added in an amount of 10 mol% based on 100 mol% in total of lithium in the cathode active material as a raw material used in the cathode active material layer, and annealing was performed.

Example 2-4

The same procedure as Example 2-1 was performed except that the cathode active material recovered in Example 1-4 was used instead of the cathode active material of Example 2-1, LiOH as a lithium precursor was added in an amount of 12 mol% based on 100 mol% in total of lithium in the cathode active material as a raw material used in the cathode active material layer, and annealing was performed.

Example 2-5

The same procedure as Example 2-1 was performed except that the cathode active material recovered in Example 1-4 was used instead of the cathode active material of Example 2-1, LiOH as a lithium precursor was added in an amount of 13 mol% based on 100 mol% in total of lithium in the cathode active material as a raw material used in the cathode active material layer, and annealing was performed.

Example 2-6

The same procedure as Example 2-1 was performed except that the cathode active material recovered in Example 1-4 was used instead of the cathode active material of Example 2-1, LiOH as a lithium precursor was added in an amount of 14 mol% based on 100 mol% in total of lithium in the cathode active material as a raw material used in the cathode active material layer, and annealing was performed.

Example 2-7

The same procedure as Example 2-1 was performed except that the cathode active material recovered in Example 1-1 was used instead of the cathode active material of Example 2-1, LiOH as a lithium precursor was added in an amount of 15 mol% based on 100 mol% in total of lithium in the cathode active material as a raw material used in the cathode active material layer, and annealing was performed.

Comparative Example 2-1

LiOH as a lithium precursor was added to the cathode active material recovered in Comparative Example 1-1, and annealing was performed at 650 °C for 5 hours in air. At this time, based on 100 mol% in total of lithium in the cathode active material as a raw material used in the cathode active material layer, the lithium precursor was added in an amount of 15 mol%.

The annealed cathode active material and distilled water were mixed at a weight ratio of 1:2, stirred at 300 rpm for 5 minutes, and then filtered under reduced pressure to obtain solids. The solids were subjected to vacuum drying at 100 to 130 °C for 12 hours to obtain a washed cathode active material. At this time, air was supplied at a rate of 3 L/min.

The washed cathode active material was coated with boric acid and heated at 300 °C for 5 hours to obtain a recycled cathode active material as a final product. At this time, boric acid was added in an amount corresponding to 1000 ppm of boron lost in the previous process, temperature was increased to the heat treatment temperature at a temperature increase rate of 2 °C/min, and air was supplied at a rate of 3 L/min.

Comparative Example 2-2

LiOH as a lithium precursor was added to the cathode active material recovered in Comparative Example 1-3, and annealing was performed at 650 °C for 5 hours in air. At this time, based on 100 mol% in total of lithium in the cathode active material as a raw material used in the cathode active material layer, the lithium precursor was added in an amount of 15 mol%.

The annealed cathode active material and distilled water were mixed at a weight ratio of 1:2, stirred at 300 rpm for 5 minutes, and then filtered under reduced pressure to obtain solids. The solids were subjected to vacuum drying at 100 to 130 °C for 12 hours to obtain a washed cathode active material. At this time, air was supplied at a rate of 3 L/min.

The washed cathode active material was coated with boric acid and heated at 300 °C for 5 hours to obtain a recycled cathode active material as a final product. At this time, temperature was increased to the heat treatment temperature at a temperature increase rate of 2 °C/min, and air was supplied at a rate of 3 L/min.

Comparative Example 2-3

LiOH as a lithium precursor was added to the cathode active material recovered in Comparative Example 1-1, and annealing was performed at 650 °C for 5 hours in air. At this time, based on 100 mol% in total of lithium in the cathode active material as a raw material used in the cathode active material layer, the lithium precursor was added in an amount of 10 mol%.

The annealed cathode active material and distilled water were mixed at a weight ratio of 1:2, stirred at 300 rpm for 5 minutes, and then filtered under reduced pressure to obtain solids. The solids were subjected to vacuum drying at 100 to 130 °C for 12 hours to obtain a washed cathode active material. At this time, air was supplied at a rate of 3 L/min.

The washed cathode active material was coated with boric acid and heated at 300 °C for 5 hours to obtain a recycled cathode active material as a final product. At this time, boric acid was added in an amount corresponding to 1000 ppm of boron lost in the previous process, temperature was increased to the heat treatment temperature at a temperature increase rate of 2 °C/min, and air was supplied at a rate of 3 L/min.

Reference Example

Instead of a recycled cathode active material, a fresh NCM-based lithium composite transition metal oxide (molar ratio of Ni:Co:Mn:Al is 88:7:4:1) was used.

[Test Example IV: SEM analysis]

The recycled cathode active materials prepared in Example 2-3, Comparative Example 2-1, and Comparative Example 2-2 were analyzed using SEM, and the results are shown in FIGS. 4 to 6 below.

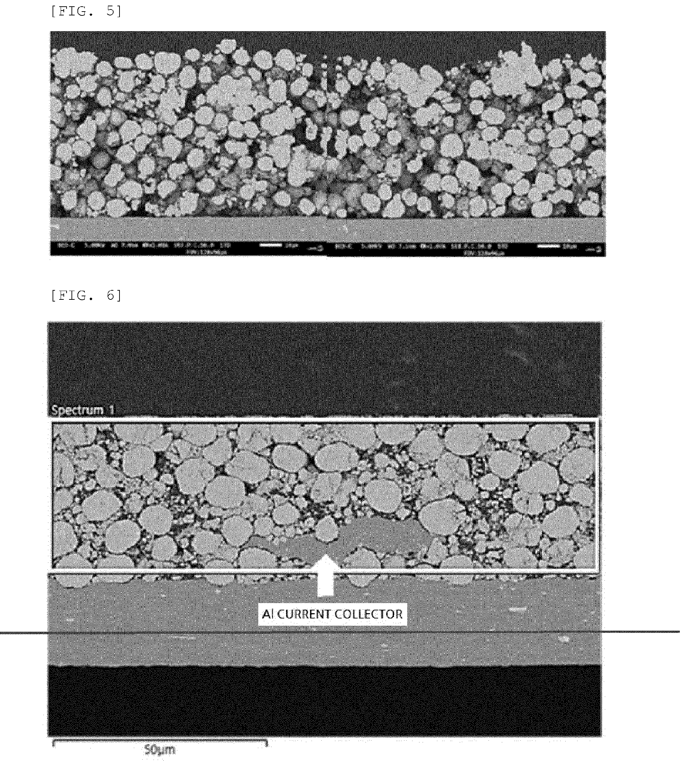

FIG. 4 below shows an SEM cross-section of the recycled cathode active material prepared by pulverizing using a pin mill in Example 2-3, FIG. 5 shows the recycled cathode active material prepared in Comparative Example 2-1 according to the prior art, and FIG. 6 shows the recycled cathode active material prepared by pulverizing using a blender in Comparative Example 2-2. As shown in FIG. 4, from cathode scraps, a cathode active material layer from which the current collector was separated by pulverizing using a pin mill was obtained. In the recycled cathode active material layer prepared using the cathode active material layer, compared to FIG. 5 below, the shape of elementary particles was maintained without being broken. On the other hand, in the case of FIG. 6 in which pulverizing was performed using a blender, the current collector was not completely separated from cathode scraps, and a portion of an aluminum current collector was incorporated into the cathode active material layer. As a result, the aluminum current collector was present in the recycled cathode active material prepared using the cathode active material layer.

[Test Example V: XRD analysis]

The recycled cathode active materials obtained in Examples 2-1 to 2-7 and Comparative Example 2-1 were subjected to XRD analysis, and the a-axis length, c-axis length, cell volume, and crystallite size of the crystal structure were measured, and the results are shown in Table 2 below.

[Table 2]

| Classification | a axis (Å) | c axis (Å) | Cell Volume (Å$^3$) | Crystallite size (nm) |
|---|---|---|---|---|
| Example 2-1 | 2.877 | 14.209 | 101.81 | 73 |
| Example 2-2 | 2.876 | 14.207 | 101.75 | 72 |
| Example 2-3 | 2.875 | 14.205 | 101.66 | 72 |
| Example 2-4 | 2.873 | 14.201 | 101.54 | 79 |
| Example 2-5 | 2.873 | 14.201 | 101. 52 | 79 |
| Example 2-6 | 2.873 | 14.201 | 101.47 | 79 |
| Example 2-7 | 2.873 | 14.201 | 101.49 | 79 |
| Comparative Example 2-1 | 2.874 | 14.205 | 101.65 | 76 |
| Reference Example | 2.874 | 14.204 | 101.58 | 85 |

As shown in Table 2, Examples 2-1 to 2-7 exhibited similar levels of the a-axis length, c-axis length, and cell volume of the crystal structure as Reference Example, and the crystallite size was reduced. These results indicate that battery characteristics were further improved.

[Test Example VI: CHC cell evaluation]

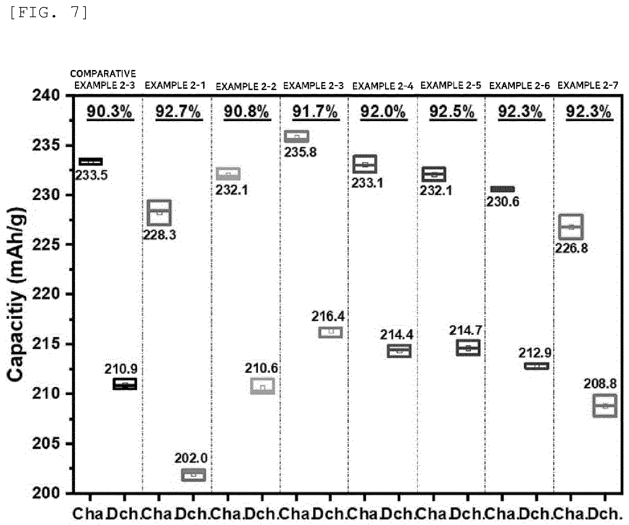

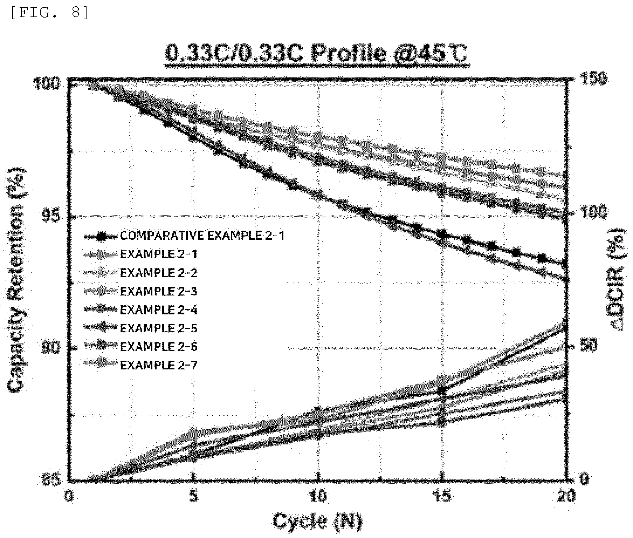

The electrochemical performance of the recycled cathode active materials prepared in Examples 2-1 to 2-7, Comparative Example 2-1, and Comparative Example 2-3 was measured through CHC cell evaluation described below, and the results are shown in FIGS. 7 and 8 and Table 3 below.

* Manufacture of CHC cell: 96 % by weight of the recycled cathode active material, 2 % by weight of carbon black as a conductive material, and 2 % by weight of PVdF as a binder were prepared and mixed in an NMP to obtain slurry, and aluminum foil was coated with the slurry to manufacture a cathode. Then, a cell (Coin Half Cell, CHC) was manufactured. Under the condition including ethylene carbonate (EC) and dimethyl methyl carbonate (DMC) (ethylene carbonate (EC):dimethyl methyl carbonate (DMC) = 3:7 (weight ratio)) as an electrolyte solution and other additives, electrochemical performance (charge capacity, discharge capacity, and efficiency) and lifespan characteristics were evaluated.

* Evaluation of initial capacity of cell: At 25 °C, each cell was charged and discharged once under the following conditions.
Charge: 0.2C, CC/CV, 4.5V, 0.05C cut-off
Discharge: 0.2C, CC, 3.0V, cut-off
* Charge/discharge efficiency of cell: Charge capacity and discharge capacity obtained in the evaluation of cell initial capacity were substituted into Equation 1 below to calculate charge/discharge efficiency, and the results are shown in Table 3 below.

Charge/discharge efficiency (%) = [Discharge capacity (mAh/g) / Charge capacity(mAh/g)] $\times$ 100      [Equation 1]

* Evaluation of high-temperature lifespan characteristics of cell: At 45 °C, under the following conditions, each cell was charged and discharged for 20 cycles, and the capacity retention rate and resistance increase rate ($\Delta$DCIR) for each cycle were calculated through Equations 2 and 3, respectively, and the results are shown in FIG. 8 below.
Charge: 0.33C, CC/CV, 4.5V, 0.05C cut-off
Discharge: 0.33C, CC, 3.0V, 0.05C cut-off Capacity retention rate (%) = (Discharge capacity after N cycles / Discharge capacity after 1 cycle) $\times$ 100      [Equation 2]

$\Delta$DCIR = {(Resistance after N cycles / Resistance --> after 1 cycle) $\times$ 100} - 100      [Equation 3]

FIG. 7 below shows the results of coin cell evaluation for each of the recycled cathode active materials prepared in Examples 2-1 to 2-7 and Comparative Example 2-3, and shows a graph showing initial charge/discharge capacity.
As shown in FIG. 7 below, in the case of the recycled cathode active material according to the present invention, thermal decomposition of the binder and the conductive material was performed at a lower temperature than in the prior art, and thus lithium loss in the cathode active material was reduced compared to the prior art. Accordingly, the amount of a lithium precursor required in a process of restoring a crystal structure was reduced. Specifically, in Example 2-3 and Comparative Example 2-3, where 10 mol% of the lithium precursor was added at the same content, Example 2-3 had better initial capacity evaluation results than Comparative Example 2-3. In addition, Example 2-2 in which 7 mol% of the lithium precursor was added exhibited initial capacity evaluation results similar to those of Comparative Example 2-3 in which 10 mol% of the lithium precursor was added.

[Table 3]

| Classificati on | Comparat ive Example 2-3 | Examp le 2-1 | Examp le 2-2 | Examp le 2-3 | Examp le 2-4 | Examp le 2-5 | Examp le 2-6 | Examp le 2-7 |
|---|---|---|---|---|---|---|---|---|
| Charge/disch arge efficiency (%) | 90.3 | 88.5 | 90.8 | 91.7 | 92.0 | 92.5 | 92.3 | 92.3 |

As shown in Table 3, the recycled cathode active materials (Examples 2-1 to 2-7) according to the present invention exhibited charge/discharge efficiency similar to or superior to those of Comparative Example 2-3 according to the prior art.
In addition, FIG. 8 shows the coin cell evaluation results of the recycled cathode active materials prepared in Examples 2-1 to 2-7 and Comparative Example 2-1, and shows a graph showing capacity retention rates and resistance increase rates over 20 cycles. In the case of the recycled cathode active materials (Examples 2-1 to 2-7) according to the present invention, compared to Comparative Example 2-1 according to the prior art, the capacity retention rate of the cell was excellent at high temperatures, and the resistance increase rates were lower than Comparative Example 2-1. Example 2-5 showed a lower capacity retention rate than Comparative Example 2-1, but showed a low resistance increase rate. Example 2-1 showed a lower resistance increase rate than Comparative Example 2-1, but showed excellent capacity retention rate compared to Comparative Example 2-1.

[Description of Symbols]

10 : CURRENT COLLECTOR
20 : ACTIVE MATERIAL LAYER
30 : CATHODE SHEET
40 : CATHODE PLATE
50 : CATHODE SCRAPS

**Claims**

1.  A method of recycling a cathode active material, comprising:

    step (a) of pulverizing a waste cathode comprising a current collector and a cathode active material layer coated on the current collector under dry conditions using a pin mill to obtain the cathode active material layer in powder form;
    step (b) of heat-treating the obtained cathode active material layer powder at 460 to 530 °C in air to recover a cathode active material;
    step (c) of adding a lithium precursor to the recovered cathode active material and performing annealing at 400 to 1000 °C; and
    step (d) of washing the annealed cathode active material with a washing solution.

2.  The method according to claim 1, wherein, in step (a), pulverizing by the pin mill is performed at 5000 to 10000 rpm.

3.  The method according to claim 1, wherein step (a) comprises a preprocessing step of shredding or cutting the waste cathode.

4.  The method according to claim 1, wherein the cathode active material recovered after heat treatment in step (b) is subjected to annealing of step (c) without washing.

5.  The method according to claim 1, wherein, in step (b), a total amount of LiOH and $Li_2CO_3$, which are surface residues of the cathode active material recovered after heat treatment, is adjusted to an amount of 1.35 % by weight or less.

6.  The method according to claim 1, wherein the cathode active material comprises one or more selected from the group consisting of nickel·cobalt·manganese (NCM)-based cathode active materials, nickel·cobalt·aluminum (NCA)-based cathode active materials, and nickel·cobalt·manganese·aluminum (NCMA)-based cathode active materials, and comprises Ni in an amount of 60 mol% or more based on 100 mol% in total of other metals other than Li.

7.  The method according to claim 1, wherein, in step (b), heat treatment is performed for 1.5 hours to 6 hours.

8.  The method according to claim 1, wherein, based on 100 mol% in total of lithium in the cathode active material as a raw material used in the cathode active material layer, the lithium precursor is added in an amount of 3 to 17 mol%.

9.  The method according to claim 1, wherein the lithium precursor comprises one or more of LiOH, $Li_2CO_3$, $LiNO_3$, and $Li_2O$.

10. The method according to claim 1, wherein the annealing is performed at 400 to 1000 °C under an oxygen atmosphere or in air.

11. The method according to claim 1, wherein the washing solution is water.

12. The method according to claim 1, comprising step (e) of coating a surface of the washed cathode active material.

13. The method according to claim 12, wherein the surface coating is performed by coating the surface with one or more of a metal, an organic metal, and a carbon component in a solid or liquid manner and heat-treating the surface at 100 to 1200 °C.

14. A recycled cathode active material prepared using the method according to claims 1 to 13.

15. A recycled cathode active material, comprising one or more selected from the group consisting of nickel·cobalt·-manganese (NCM)-based cathode active materials, nickel·cobalt·aluminum (NCA)-based cathode active materials, and nickel·cobalt·manganese·aluminum (NCMA)-based cathode active materials and Ni in an amount of 60 mol% or more based on 100 mol% in total of other metals other than Li,
wherein a total amount of residual LiOH and $Li_2CO_3$ in the recycled cathode active material is 1.35 % by weight or less, and the recycled cathode active material have a crystal structure having an a-axis length of 2.871 to 2.888 Å, a c-axis length of 14.200 to 14.210 Å, a cell volume of 101.45 to 101.82 Å$^3$, and a crystallite size of 72 to 84 nm as measured by XRD.

16. The recycled cathode active material according to claim 15, wherein a surface of the recycled cathode active material is coated with a coating agent containing a metal or carbon.

17. A secondary battery, comprising the recycled cathode active material according to claim 15 or 16.

18. A method of recycling a cathode active material, comprising:

step (a) of applying an impulsive force of 5.1 to 10.2 newton (N) and a centrifugal force of 2600 to 10700 newton (N) to a waste cathode comprising a current collector and a cathode active material layer coated on the current collector under dry conditions to obtain the cathode active material layer in powder form;
step (b) of heat-treating the obtained cathode active material layer powder at 460 to 530 °C in air to recover a cathode active material;
step (c) of adding a lithium precursor to the recovered cathode active material and performing annealing at 400 to 1000 °C; and
step (d) of washing the annealed cathode active material with a washing solution.

[FIG. 1]

[FIG. 2]

[FIG. 3]

[FIG. 4]

[FIG. 5]

[FIG. 6]

Al CURRENT COLLECTOR

50μm

[FIG. 7]

[FIG. 8]

0.33C/0.33C Profile @45℃

[FIG. 9]

S10 — WASTE CATHODE

↓

S20 — CRUSHING

↓

S30 — DRY PULVERIZING

↓

S40 — HEAT TREATING

↓

S50 — ANNEALING

↓

S60 — WASHING

↓

S70 — SURFACE COATING

↓

RECYCLED CATHODE
ACTIVE MATERIAL

## INTERNATIONAL SEARCH REPORT

| International application No. |
|---|
| **PCT/KR2024/000773** |

### A. CLASSIFICATION OF SUBJECT MATTER

**H01M 10/54**(2006.01)i; **H01M 4/525**(2010.01)i; **H01M 4/36**(2006.01)i; **H01M 10/052**(2010.01)i; **C01G 53/00**(2006.01)i; **C22B 1/00**(2006.01)i; **C22B 1/02**(2006.01)i; **C22B 7/00**(2006.01)i; **C22B 4/00**(2006.01)i

According to International Patent Classification (IPC) or to both national classification and IPC

### B. FIELDS SEARCHED

Minimum documentation searched (classification system followed by classification symbols)

H01M 10/54(2006.01); C01G 53/00(2006.01); H01M 10/052(2010.01); H01M 4/131(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 핀 밀(pin mill), 열처리(heat treatment), 어닐링(annealing), 세척 (cleaning), 양극 활물질(anode active material), 재생(regeneration)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0145455 A (LG ENERGY SOLUTION, LTD.) 02 December 2021 (2021-12-02) See paragraphs [0014]-[0133] and claims 1-14. | 1-18 |
| Y | KR 10-2022-0042663 A (LG ENERGY SOLUTION, LTD.) 05 April 2022 (2022-04-05) See paragraph [0074] and claim 1. | 1-14,18 |
| Y | KR 10-2022-0023569 A (COSMO AM&T CO., LTD.) 02 March 2022 (2022-03-02) See paragraphs [0063]-[0153] and claim 4. | 5,15-17 |
| A | KR 10-2023-0057094 A (LG ENERGY SOLUTION, LTD.) 28 April 2023 (2023-04-28) See paragraphs [0019]-[0047] and claim 1. | 1-18 |
| A | KR 10-2007411 B1 (SAMSUNG SDI CO., LTD. et al.) 01 October 2019 (2019-10-01) See paragraph [0062] and claim 9. | 1-18 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 April 2024** | **24 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000773**

| Patent document cited in search report | | | Publication date (day/month/year) | Patent family member(s) | | | Publication date (day/month/year) |
|---|---|---|---|---|---|---|---|
| KR | 10-2021-0145455 | A | 02 December 2021 | CN | 115136385 | A | 30 September 2022 |
| | | | | EP | 4099476 | A1 | 07 December 2022 |
| | | | | JP | 2023-512620 | A | 28 March 2023 |
| | | | | JP | 7357801 | B2 | 06 October 2023 |
| | | | | US | 2023-0082541 | A1 | 16 March 2023 |
| | | | | WO | 2021-241835 | A1 | 02 December 2021 |
| KR | 10-2022-0042663 | A | 05 April 2022 | CN | 115668583 | A | 31 January 2023 |
| | | | | EP | 4152477 | A1 | 22 March 2023 |
| | | | | JP | 2023-526826 | A | 23 June 2023 |
| | | | | JP | 7422900 | B2 | 26 January 2024 |
| | | | | US | 2023-0238598 | A1 | 27 July 2023 |
| | | | | WO | 2022-065721 | A1 | 31 March 2022 |
| KR | 10-2022-0023569 | A | 02 March 2022 | KR | 10-2515175 | B1 | 29 March 2023 |
| KR | 10-2023-0057094 | A | 28 April 2023 | CN | 117015898 | A | 07 November 2023 |
| | | | | EP | 4297148 | A1 | 27 December 2023 |
| | | | | JP | 2024-507559 | A | 20 February 2024 |
| | | | | US | 2024-0055597 | A1 | 15 February 2024 |
| | | | | WO | 2023-068525 | A1 | 27 April 2023 |
| KR | 10-2007411 | B1 | 01 October 2019 | CN | 103915610 | A | 09 July 2014 |
| | | | | CN | 103915610 | B | 12 January 2018 |
| | | | | JP | 2014-132572 | A | 17 July 2014 |
| | | | | JP | 6342161 | B2 | 13 June 2018 |
| | | | | KR | 10-2014-0089851 | A | 16 July 2014 |
| | | | | US | 2014-0193714 | A1 | 10 July 2014 |
| | | | | US | 9620771 | B2 | 11 April 2017 |

Form PCT/ISA/210 (patent family annex) (July 2022)

**REFERENCES CITED IN THE DESCRIPTION**

**Patent documents cited in the description**

- KR 1020230078759

- KR 1020240005347